(19) Europäisches Patentamt
European Patent Office
Office européen des brevets

(11) Numéro de publication : **0 038 741 B2**

# (12) NOUVEAU FASCICULE DE BREVET EUROPEEN

(45) Date de publication du nouveau fascicule du brevet : **14.08.91 Bulletin 91/33**

(51) Int. Cl.$^5$ : **B01J 21/06, C01B 17/16, C01B 17/04, B01D 53/36**

(21) Numéro de dépôt : **81400573.2**

(22) Date de dépôt : **10.04.81**

## (54) Procédé de fabrication de catalyseurs ou de supports de catalyseurs façonnés à base d'oxyde de titane et leurs applications à la catalyse Claus.

Le dossier contient des informations techniques présentées postérieurement au dépôt de la demande et ne figurant pas dans le présent fascicule.

(30) Priorité : **23.04.80 FR 8009126**

(43) Date de publication de la demande : **28.10.81 Bulletin 81/43**

(45) Mention de la délivrance du brevet : **28.03.84 Bulletin 84/13**

(45) Mention de la décision concernant l'opposition : **14.08.91 Bulletin 91/33**

(84) Etats contractants désignés : **AT BE CH DE FR GB IT LI NL SE**

(56) Documents cités :
**DE-A- 2 846 476**
**DE-B- 2 458 888**
**FR-A- 2 224 203**

(56) Documents cités :
**FR-A- 2 301 299**
**GB-A- 622 324**
**Ind. Ing. Chemisty, Bd. 16, no. 1, 1977, pages 35-41**
**Journal of Phys. Chemistry Bd XXX, pages 106-113**
**Ullmann, Bd 18, page 574 (4. Auflage)**

(73) Titulaire : **RHONE-POULENC CHIMIE**
**25, quai Paul Doumer**
**F-92408 Courbevoie Cédex (FR)**

(72) Inventeur : **Dupin, Thierry**
**7, rue Robert de Luzarches**
**F-95140 Garges/Les/Gonesse (FR)**
Inventeur : **Bouge, Gilbert**
**11bis, avenue Jalabert**
**F-30340 Salindres (FR)**
Inventeur : **Poisson, Régis**
**17, avenue de la Cigale**
**F-92600 Asnières (FR)**

(74) Mandataire : **Esson, Jean-Pierre et al**
**Rhône-Poulenc Interservices Service Brevets Chimie 25, quai Paul Doumer**
**F-92408 Courbevoie Cedex (FR)**

EP 0 038 741 B2

## Description

Procédé de fabrication de catalyseurs ou de supports de catalyseurs façonnés à base d'oxyde de titane et leurs applications à la catalyse Claus

La présente invention concerne un procédé de fabrication de supports de catalyseurs ou de catalyseurs façonnés à base d'oxyde de titane et leurs applications à la catalyse Claus.

On connaît différents procédés de fabrication de supports ou de catalyseurs façonnés à base d'oxyde de titane, toutefois ces procédés s'avèrent conduire à des produits dont la résistance mécanique et les caractéristiques texturales ne sont absolument pas satisfaisantes.

Il a été proposé selon la demande de brevet français n° 2 336 177 de préparer des catalyseurs ou des supports à base d'oxyde de titane en calcinant à 200-800°C la matière première constituée d'oxyde de titane ou d'une substance convertible en oxyde de titane en présence d'un sol ou d'un gel d'acide métatitanique. Ce procédé s'avère toutefois conduire à des produits dont la surface spéfique ne dépasse pas environ 50 $m^2/g$ et dont le volume de pore, la répartition des dimensions de pore et la résistance mécanique ne sont pas satisfaisants. En particulier, le procédé décrit dans cette demande de brevet français n° 2 336 177 ne permet pas de contrôler simplement ou même efficacement la structure de pore du produit. De plus, ce procédé nécessite l'utilisation d'un sol ou d'un gel d'acide métatitanique qui rend le procédé complexe et délicat à mettre en oeuvre.

Par ailleurs, il a été proposé selon la brevet US-A-4 061 596 de préparer des supports de catalyseurs façonnés à base d'oxyde de titane par calcination de l'oxyde de titane à 400-800°C, puis mise en forme et calcination du produit façonné à 300-800°C. Ce procédé conduit à des supports constitués d'oxyde de titane dont la surface spécifique ne dépasse pas environ 80 $m^2/g$ et dont le volume de pore, la répartition des dimensions de pore et la résistance mécanique ne sont pas satisfaisants.

La demanderesse a mis au point un procédé qui remédie aux inconvénients des procédés décrits ci-dessus et qui permet notamment d'obtenir des produits à base d'oxyde de titane présentant une solidité mécanique et une résistance à l'attrition exceptionnelles, de très grandes surfaces spécifiques et des caractéristiques de pores parfaitement contrôlées.

De plus, le procédé mis au point est particulièrement économique par rapport au procédé de l'art antérieur puisque, d'une part, il ne nécessite pas la fabrication spéciale d'un sol ou d'un gel de titane et que, d'autre part, il ne nécessite pas une précalcination de la matière première qui est coûteuse en énergie. Ce procédé comporte en particulier la mise en forme d'un mélange d'une poudre d'oxyde de titane mal cristallisé et/ou amorphe, d'eau et d'additifs de mise en forme, puis sa calcination.

La présente invention concerne un procédé de fabrication de supports de catalyseurs ou de catalyseurs par malaxage d'un mélange d'une poudre d'oxyde de titane, d'un additif de mise en forme et d'eau, par mise en forme de ce mélange, par séchage éventuel et par calcination des produits obtenus caractérisé en ce que le mélange comporte de 1 à 40 % en poids d'eau, de 0 à 15 % en poids d'additif, de 45 à 99 % en poids d'une poudre d'oxyde de titane mal cristallisée et/ou amorphe présentant une perte au feu comprise entre 1 et 50 % obtenue par séchage d'une suspension aqueuse d'oxyde de titane provenant de l'attaque sulfurique de l'ilménite.

Les produits obtenus selon le procédé de l'invention présentent une solidité et une résistance à l'attrition exceptionnelle, une surface spécifique qui peut aller jusqu'à environ 300 $m^2/g$ et une structure de pore très facilement réglable.

La présente invention concerne également l'application des produits obtenus selon le procédé comme catalyseurs ou supports de catalyseurs dans la catalyse Claus de récupération de soufre à partir de gaz contenant notamment de l'hydrogène sulfuré $H_2S$, de l'anhydride sulfureux $SO_2$ et éventuellement des dérivés organiques du soufre tels que le sulfure de carbone $CS_2$ et l'oxysulfure de carbone COS.

Selon la première étape du procédé de l'invention, on opère le malaxage d'un mélange comportant de 1 à 40% en poids d'eau, de 0 à 15% en poids d'additif de mise en forme et de 45 à 99% en poids d'une poudre d'oxyde de titane mal cristallisé et/ou amorphe présentant une perte au feu comprise entre 1 et 50%. Les pourcentages en poids indiqués sont rapportés au poids total du mélange.

De préférence, selon cette première étape, on opère le malaxage d'un mélange comportant de 5 à 35% en poids d'eau ; de 0,1 à 10% en poids d'additifs de mise en forme et de 55 à 94.9% en poids d'une poudre d'oxyde de titane mal cristallisé et/ou amorphe.

Les additifs de mise en forme que l'on peut mettre en oeuvre dans cette première étape sont ceux utilisés classiquement dans les techniques de mise en forme. Ces additifs confèrent à la pâte obtenue par malaxage les propriétés rhéologiques adaptées à la mise en forme. A titre d'exemple d'additifs de mise en forme, on peut citer notamment : la cellulose, la carboxyméthyl-cellulose, la carboxyéthyl-cellulose, du tall-oil, les gommes

xanthane, des agents tensio-actifs, des agents floculants comme les polyacrylamides, le noir de carbone, les amidons, l'acide stéarique, l'acide polyacrylique, l'alcool polyvinylique, des biopolymères, le glucose, les polyéthylène glycol.

La poudre d'oxyde de titane mal cristallisé et/ou amorphe mise en oeuvre présente une perte au feu comprise entre 1 et 50% et de préférence entre 5 et 40%. On entend par mal cristallisé en oxyde de titane ayant un spectre de rayons X présentant des halos à la place des raies principales de l'oxyde de titane bien cristallisé. On entend par amorphe un oxyde de titane dont le spectre de rayon X ne présente aucune raie de diffraction. La perte au feu (PAF) de la poudre est mesurée comme la perte en poids correspondant au rapport :

$$\text{PAF en \%} = \frac{Po = Pl}{Po} \text{ dans lequel}$$

Po = Poids initial de la matière première

$P_l$ = Poids de cette matière première après calcination 2 heures à 1 000°C et refroidissement à la température ambiante dans une enceinte anhydre.

La matière première mise en oeuvre selon le procédé de l'invention est une suspension aqueuse d'oxyde de titane amorphe et/ou mal cristallisé. L'oxyde de titane en suspension peut se trouver sous forme acide ortho ou métatitanique et/ou oxyhydroxyde de titane.

La suspension aqueuse constituée principalement d'oxyde de titane amorphe et/ou mal cristallisé est obtenue à partir du procédé classique de l'attaque sulfurique de l'ilménite après l'étape d'hydrolyse et de filtration.

On obtient la poudre ayant la PAF désirée par séchage de ladite suspension par les techniques classiques d'atomisation, d'étuvage ou toute technique de séchage dans laquelle la poudre obtenue reste à une température inférieure à 200°C.

Le temps de malaxage du mélange peut varier dans de larges limites, il est généralement compris entre quelques minutes et trois heures.

Selon une variante du procédé de l'invention, on peut ajouter au mélange de préférence jusqu'à environ 30 % en poids d'un constituant choisi parmi la silice, l'alumine, les argiles, les silicates, le sulfate de titane, les fibres céramiques, etc.

Selon la seconde étape du procédé d'invention, on opère la mise en forme du mélange. La mise en forme peut conduire à des produits de forme sphérique, cylindrique, de pastilles, de boulettes, de granulés, de nid d'abeille, etc. de dimensions variées. Ils peuvent notamment être obtenus avec une machine à pastiller, un granulateur tournant, une machine de moulage par extrusion, une machine à former des boulettes ou une combinaison d'une machine de moulage par extrusion avec un granulateur tournant.

Selon la troisième étape du procédé de l'invention, on sèche éventuellement, puis on calcine les produits obtenus. On calcine le produit séché ou non à une température comprise entre 200 et 900°C. La température de calcination permet de régler la surface spécifique du produit obtenu entre 5 et 300 $m^2/g$. Une calcination à haute température conduit généralement à un produit présentant une faible surface et une calcination à faible température conduit généralement à un produit présentant une grande surface spécifique.

Par ailleurs, les produits obtenus selon la procédé de l'invention présentent un volume de pore total compris entre 0,05 et 0,5 $cm^3/g$, une résistance mécanique mesurée par la méthode d'écrasement grain par grain (EGG) très importante et une résistance à l'attrition exceptionnelle.

Le volume poreux du produit peut être très facilement réglé selon le procédé de l'invention, notamment en ajustant la granulométrie de la poudre d'oxyde de titane, en choisissant la nature des additifs de mise en forme et la perte au feu du mélange mis en forme, en règlant la température de calcination. Par ailleurs, ainsi qu'il est bien connu de l'homme de l'art, on peut règler le volume poreux en ajoutant au mélange des agents porogènes tels que, par exemple, le charbon de bois, la cellulose cristalline, l'amidon, des polymères organiques, etc...

La présente invention concerne également l'application des produits obtenus selon le procédé comme catalyseurs ou supports de catalyseurs dans la catalyse Claus de récupération du soufre à partir de gaz renfermant notamment de l'hydrogène sulfuré, de l'anhydride sulfureux et, éventuellement, des dérivés organiques du soufre.

Dans le procédé Claus classique auquel n'est d'ailleurs pas limitée l'invention, la récupération du soufre à partir de gaz renfermant de l'hydrogène sulfuré et éventuellement des dérivés organiques du soufre, comporte deux étapes.

Dans une première étape, on brûle l'hydrogène sulfuré en présence d'une quantité d'air réglée pour transformer une partie du gaz en anhydride sulfureux puis, dans une deuxième étape, on fait passer le mélange gazeux obtenu dans un réacteur renfermant un catalyseur sur lequel a lieu la réaction

$$2H_2S + SO_2 \rightleftharpoons \frac{3}{n} S_n + 2H_2O. (1)$$

La demanderesse a découvert que les produits obtenus selon la procédé de l'invention permettent d'atteindre des rendements supérieurs à ceux obtenus avec les catalyseurs classiques pour des temps de contact plus courts.

Selon un premier mode de mise en oeuvre spécifique de l'invention on brûle à environ 1000°C un mélange gazeux comprenant de l'hydrogène sulfuré avec une quantité d'air réglée pour transformer en anhydride sulfureux une proportion de l'hydrogène sulfuré présent. Du soufre peut également être produit et l'on fait passer le gaz, après son passage dans une chaudière de récupération de chaleur, à travers un premier condenseur de soufre. On envoie alors le gaz à travers une série de réacteurs (en général 2 ou 3) renfermant le catalyseur obtenu selon le procédé de l'invention, réacteurs dans lesquels a lieu la réaction (1).

Les gaz que se dégagent sont refroidis dans un condenseur de soufre et réchauffés à l'entrée de chaque réacteur.

Outre l'hydrogène sulfuré, les gaz Claus peuvent contenir des composés carbonés du soufre tels que COS et $CS_2$ qui sont généralement relativement stables au niveau des convertisseurs catalytiques et qui contribuent à accroître de 20 à 50% les émissions de $SO_2$ et de composés sulfurés dans l'atmosphère après incinération des fumées. Ces composés très gênants sont, soit déjà contenus dans le gaz à traiter, soit formés au cours de la première étape à haute température.

Les produits obtenus selon le procédé de l'invention permettent d'éliminer par hydrolyse selon les réactions (2), (3) et/ou (4) ces dérivés carbonés du soufre extrêmement gênants :

$$CS_2 + 2H_2O \longrightarrow CO_2 + 2H_2S \quad (2)$$
$$CS_2 + H_2O \longrightarrow COS + H_2S \quad (3)$$
$$COS + H_2O \longrightarrow CO_2 + H_2S \quad (4)$$

Selon un second mode de mise en oeuvre spécifique de l'invention, on envoie dans une série de réacteurs (en général 2 ou 3) contenant le catalyseur obtenu selon le procédé de l'invention des gaz Claus contenant notamment de l'hydrogène sulfuré, du sulfure de carbone et/ou l'oxysulfure de carbone et de l'anhydride sulfureux nécessaire pour réaliser simultanément les réactions (1), (2), (3), (4).

Les catalyseurs obtenus selon le procédé de l'invention présentent une activité supérieure à celle obtenue avec les catalyseurs conventionnels pour la réaction (1). Ils permettent donc en réalisant cette réaction avec un meilleur rendement dans un temps plus court de réduire la taille des réacteurs mis en oeuvre.

De plus, ces catalyseurs ne sont pas sensibles à la présence d'oxygène dans les gaz jusqu'à des teneurs d'environ 0,5%, ils ne sont donc pas désactivés par sulfatation comme les catalyseurs conventionnels. De ce fait, les catalyseurs selon l'invention présentent une durée de vie très supérieure à celle des catalyseurs connus.

Par ailleurs en réalisant les réactions (2), (3) et/ou (4) avec des rendements proches de 100%, les catalyseurs selon l'invention permettent d'améliorer sensiblement le rendement global de récupération du soufre et de diminuer considérablement la nocivité des gaz rejetés à l'atmosphère. De plus, les catalyseurs de l'invention ne sont pas sensibles à la présence d'oxygène vis-à-vis des réactions (2), (3) et/ou (4).

Les exemples ci-après illustrent l'invention sans en limiter la portée. Dans ces exemples les méthodes de mesures appliquées sont les suivantes :

1 - Les surfaces spécifiques (SBE) sont mesurées par la méthode classique d'absorption d'azote dite méthode BET.

2 - Les volumes poreux (VPT) et les diamètres moyens de pores ($\varnothing_m$) sont déterminés par la méthode classique de pénétration au mercure. On distingue le volume microporeux Vmp qui correspond à des diamètres de pores inférieurs à 50 nm et le volume macroporeux VMP qui correspond à des diamètres de pores supérieurs à 50 nm ; pour chaque catégorie on peut déterminer un diamètre moyen de pore.

3 - La solidité mécanique est mesurée, d'une part, par la méthode d'écrasement grain à grain (EGG). Elle consiste à mesurer la force de compression maximale que peut supporter un granulé avant sa rupture, lorsque le produit est placé entre deux plans se déplaçant à la vitesse constante de 5 cm/min. Dans le cas particulier de sphères, la force sera exprimée en kilogrammes. Dans le cas particulier des extrudés ou des pastilles la compression est appliquée perpendiculairement à l'une des génératrices du produit, et l'écrasement grain à grain sera exprimé comme le rapport de la force à la longueur de la génératrice et sera donc en kilogrammes/mm.

4 - La solidité mécanique est, d'autre part, mesurée par la résistance à l'attrition (R.A.). Cette méthode consiste à mesurer la quantité de poussière produite par 100 grammes de granulés placés sur un tamis

n° 24 de 20 cm de diamètre de la série AFNOR X11-501 et vibrés pendant 10 minutes à l'aide d'un vibreur de la marque Fenwick Rex. La R.A. est le poids de poussière récupéré.

Exemple 1

Une suspension d'oxyde de titane obtenue après hydrolyse et filtration dans le procédé classique d'attaque sulfurique de l'ilménite est séchée par passage dans un échangeur de chaleur dans lequel la suspension, puis la poudre sont déplacées au moyen d'une vis sans fin, laquelle est chauffée par un fluide caloporteur.

La perte au feu de la poudre obtenue est de 17,5%. Le produit obtenu présente une structure d'anatase mal cristallisé dont le diagramme de diffraction aux rayons X est donné figure n° 1.

On prépare par malaxage pendant 20 minutes un mélange contenant :

- 69% de cette poudre,
- 30,8% d'eau,
- 0,2% de polyacrylamide.

Ce mélange est introduit dans une extrudeuse et filé au travers d'une filière de diamètre 5 mm. Les extrudés obtenus sont séchés à 110°C pendant 24 heures puis calcinés à 350°C pendant 2 heures au four électrique sous air.

Les caractéristiques du produit fini sont les suivantes :

- SBE = 217 $m^2g^{-1}$
- VPT = 29,6 $cm^3$/100g
- $\varnothing_m$ = 7nm
- EGG = 1,8 kg/mm
- RA = 1,2%

Exemple 2

Le produit extrudé de l'exemple 1 peut être réactivé en four tournant à propane vers 430°C pendant 2 heures. Il a alors les caractéristiques suivantes :

- SBE = 128$m^2g^{-1}$
- VPT = 31 $cm^3$/100g
- $\varnothing_m$ = 11nm
- EGG = 1,5 Kg/mm
- RA = 2,2%

Exemple 3

Le produit extrudé de l'exemple 1 peut être réactivé au four électrique à 800°C, il a alors les caractéristiques suivantes :

- SBE = 36$m^2g^{-1}$
- VPT = 26 $cm^3$/100 g
- $\varnothing_m$ = 30,4 nm
- EGG = 2,1 kg/mm
- RA = 0,7%

Exemple 4

Le produit extrudé de l'exemple 1 peut être réactivé au four électrique à 900°C pendant 2 heures il a alors les caractéristiques suivantes :

- SBE = 14$m^2g^{-1}$
- VPT = 13 $cm^3$/100g
- $\varnothing_m$ = 36 nm
- EGG = 3,5 Kg/mm
- RA = 0,2%

Exemple 5

Les extrudés obtenus selon l'exemple 1 ne sont pas séchés mais calcinés directement à 430°C, 2 heures en four électrique, les caractéristiques du produit obtenu sont alors :

- SBE = 146$m^2g^{-1}$
- VPT = 30,3 $cm^3$/100g
- $\varnothing_m$ = 9 nm
- EGG = 1,7 Kg/mm
- RA = 1,1 %

Exemple 6

La suspension de l'exemple 1 est séchée en étuve ventilée à 150°C pendant 16 heures. La perte au feu de la poudre obtenue est de 34% et présente le même spectre au rayon X que la poudre obtenue dans l'exemple 1.

On malaxe pendant 30 minutes un mélange contenant :

– 83% de cette poudre,
– 16,8% d'eau,
– 0,2% de polyacrylamide (AD 10)

Ce mélange est extrudé au travers d'une filière de diamètre 5 mm, le produit obtenu est séché à 110°C pendant 8 heures, puis calciné à 400°C pendant 5 heures dans un four électrique. Les caractéristiques du produit obtenu sont les suivantes :

- SBE = 136 $m^2g^{-1}$
- VPT = 28,4 $cm^3$/100g
- $\varnothing_m$ = 9,2 nm
- EGG = 1,7 Kg/mm
- RA = 1,7%

Exemple 7

La suspension de l'exemple 1 est séchée en étuve ventilée à 100°C pendant 24 heures. La perte au feu de la poudre obtenue est de 47%. On malaxe pendant une heure le mélange constitué de :

– 99% de cette poudre,
– 1% d'eau

Le mélange est extrudé au travers d'une filière de diamètre 5 mm, le produit est séché à 110°C pendant 8 heures puis calciné à 300°C pendant 2 heures et possède les caractéristiques suivantes :

- SBE = 247 $m^2g^{-1}$
- VPT = 28,1 $cm^3$/100g
- $\varnothing_m$ = 4,0 nm
- EGG = 2,5 Kg/mm
- RA = 0,6%

Exemple 8

La poudre obtenue selon l'exemple 1 est malaxée pendant 40 min en présence d'eau et d'alcool polyvinylique dans les proportions suivantes :

– 67% de poudre
– 28% d'eau
– 5% d'alcool polyvinylique

Ce mélange est extrudé au travers d'une filière de diamètre 5 mm et les extrudés sont coupés dès la sortie de la filière au moyen d'un couteau tournant placé juste à la sortie de la filière.

Les extrudés coupés sont alors placés dans une cuve tournant à grande vitesse et dont les parois comportent des stries.

Sous l'effet de la rotation, les extrudés coupés roulent les uns sur les autres et sur les parois, de telle sorte qu'ils acquièrent une forme sphérique. Ces billes obtenues sont alors séchées à 100°C pendant 8 heures, puis calcinées à 350°C pendant 2 heures en four électrique, ils possèdent les caractéristiques suivantes :

- SBE = 185 $m^2g^{-1}$
- VPT = 27 $cm^3$/100g
- $\varnothing_m$ = 5,5 nm
- EGG = 9,3 kg
- RA = 0,7%

Exemple 9

La poudre obtenue selon l'exemple 1 est malaxée pendant 7 min en présence d'eau et de polysaccharide (Rhodopol XB 23) dans les proportions suivantes :

68% de poudre
30% d'eau
2% de polysaccharide

Le mélange est extrudé au travers d'une filière de 6 mm, séché à 150°C pendant 2 heures, puis calciné à 400°C pendant 2 heures en four tournant à propane. Le produit a les caractéristiques suivantes :

- SBE = 157$m^2g^{-1}$
- VPT = 29,3 $cm^3$/100 g
- $\varnothing_m$ = 9,2 nm
- EGG = 1,6 Kg/mm
- RA = 1,6%

Exemple 10

La suspension de l'exemple 1 est séchée en étuve à 150°C pendant 48 heures.

La poudre obtenue a une perte au feu de 14%. On malaxe pendant 2 heures cette poudre en présence d'eau et d'amidon de riz dans les proportions suivantes :

– 61 % de poudre
– 37% d'eau
– 2% d'amidon de riz

Ce mélange est introduit dans une extrudeuse double vis et filé à travers une filière de 3 mm. Les extrudés obtenus sont séchés à 110°C pendant 24 heures puis calcinés à 400°C pendant 2 heures au four électrique. Le produit a les caractéristiques suivantes

- SBE = 175 $m^2$/g
- VPT = 40 $cm^3$/100g
- Vmp <50 nm = 25 $cm^3$/100g centrés sur 9,0 nm
- VMP >50 nm = 15 $cm^3$/100g centrés sur 0,1 μm
- EGG = 2,3 Kg/mm
- RA = 0,9%

Exemple 11

A partir de la poudre obtenue selon l'exemple 10, on malaxe pendant 2 heures le mélange suivant :

– 60% de poudre
– 36% d'eau
– 4% d'amidon de riz

Les extrudés ayant subi le même traitement que pour l'exemple 12 ont les propriétés suivantes :

- SBE = 169 $m^2$/g
- VPT = 48 $cm^3$/100 g
- Vmp <50 nm 25,5 $cm^3$/100g centrés sur 14 nm
- VMP >50 nm 22,5 $cm^3$/100g centrés sur 0,13 μm
- EGG = 1,0 Kg/mm
- RA = 1,2%

Exemple 12

La suspension de l'exemple 1 est séchée dans un atomiseur à 110°C. La poudre obtenue a une PAF de 18% et présente le même spectre de RX que dans le cas de l'exemple 1. On malaxe pendant 45 minutes un mélange contenant :

– 69,2% de cette poudre
– 28,8% d'eau
– 2% de carboxyléthylcellulose

Le mélange est extrudé au travers d'une filière de 3mm. Les extrudés sont séchés à 150°C pendant 8 heures puis calcinés à 450°C pendant 2 heures. Le produit obtenu présente les caractéristiques suivantes :

- SBE = 117 $m^2g^{-1}$

- VPT = 29 $cm^3$/100g
- $\varnothing_m$ = 10 nm
- EGG = 1,3 Kg/mm
- RA = 2,7%

Exemple 13

La poudre obtenue selon l'exemple 1 est malaxée pendant 1H30 en présence d'eau et de noir de carbone dans les proportions suivantes :

– 72% de poudre
– 22% d'eau
– 6% de noir de carbone

Le mélange est compacté à la pression de 480 Kg/$cm^2$ dans une pastilleuse. La dimension des pastilles est diamètre : 5mm, longueur 5mm.

Le produit séché à 110°C pendant 24 heures est calciné à 600°C pendant 2 heures en four électrique avec fort balayage d'air. Les caractéristiques du produit sont les suivantes :

- SBE = 54 $m^2g^{-1}$
- VPT = 27 $cm^3$/100g
- $\varnothing_m$ = 21 nm
- EGG = 6,2 kg/mm
- RA = 0,8%

Exemple 14

La poudre obtenue selon l'exemple 1 est malaxée pendant 2 heures en présence d'eau et de polyéthylène glycol (PEG) dans les proportions suivantes :

– 74% de poudre
– 21% d'eau
– 5% de PEG

La mélange est pastillé comme pour l'exemple précédent ; le produit séché à 110°C pendant 24 heures, est calciné à 350°C pendant 2 heures au four électrique ; les caractéristiques du produit sont les suivantes :

- SBE = 212 $m^2g^{-1}$
- VPT = 26,5 $cm^3$/100 g
- $\varnothing_m$ = 5,5 nm
- EGG = 8,2 kg/mm
- RA = 1,1%

Exemple 15

La poudre obtenue selon l'exemple 6 est mélangée progressivement à de l'eau additionnée de glucose dans un bol tournant (drageoir). En fin d'opération le bilan global indique que les billes obtenues ont la composition suivante :

– 66% de poudre
– 30% d'eau
– 4% de glucose

Les billes ont des diamètres compris entre 3 et 6mm. Celles-ci sont séchées à 110°C pendant 24 heures, puis calcinées à 800°C pendant 2 heures. Elles ont alors les caractéristiques suivantes :

- SBE = 35 $m^2g^{-1}$
- VPT = 33 $cm^3$/100 g
- $\varnothing_m$ = 42 nm
- EGG = 5,9 kg
- RA = 0,2%

Exemple 16

Le poudre obtenue dans l'exemple 1 est malaxée pendant 15 minutes en présence d'eau et d'alumine sous forme de boehmite dans les proportions suivantes :

– 70% de poudre

– 22% d'eau
– 8% d'alumine

Le mélange est extrudé sur une extrudeuse monovis et filé au travers d'une filière de diamètre 5mm. Les extrudés sont séchés à 110°C pendant 24 heures puis calcinés à 450°C pendant 2 heures. Les caractéristiques du produit sont les suivantes :

- SBE = 156 $m^2g^{-1}$
- VPT = 30,5 $cm^3$/100g
- $\varnothing_m$ = 7,0 nm
- EGG = 1,7 kg/mm
- RA = 1,4%

Exemple 17

On opère de manière similaire à celle décrite dans l'exemple 16 avec le mélange suivant :
– 70% de poudre
– 21% d'eau
– 9% d'argile kaolinitique

Le produit est calciné à 750°C pendant 2 heures et a les caractéristiques suivantes :

- SBE = 31 $m^2g^{-1}$
- VPT = 24 $cm^3$/100g
- $\varnothing_m$ = 21,0 nm
- EGG = 4,5 kg/mm
- RA = 0,2%

Exemple 18

La poudre obtenue selon l'exemple 1 est granulée sous forme de billes dans un granulateur rotatif, à l'aide d'une solution diluée de silicate de sodium. Le produit fini aggloméré a la composition suivante :
– 72% de poudre
– 25% d'eau
– 3% de silicate de sodium

Les billes sont séchées à 110°C pendant une nuit puis calcinées à 300°C pendant 2 heures. Le produit a les caractéristiques suivantes :

- SBE = 234 $m^2g^{-1}$
- VPT = 29,5 $cm^3$/100g
- $\varnothing_m$ = 5,7 nm
- EGG = 7,5 kg
diamètre entre 3 et 4 mm
- RA = 0,3%

Exemple 19

Le présent exemple illustre l'application des catalyseurs de l'invention obtenus selon les exemples 3 et 12 à la réaction

$$2H_2S + SO_2 \rightleftharpoons \frac{3}{n} S_n + 2H_2O \quad (1)$$

On envoie dans une série de 3 réacteurs isothermes un gaz dans les conditions suivantes :
a) entrée premier réacteur composition volumique du gaz :

$H_2S$ : 9%
$SO_2$ : 4,5%
$H_2O$ : 20%
$N_2$ : 66,5%

La température du réacteur est de 300°C,
Catalyseur : celui obtenu selon l'example 12.
b) entrée deuxième réacteur composition volumique du gaz :

$H_2S$ : 2,5%
$SO_2$ : 1,2 5%
$H_2O$ : 27%
$N_2$ : 69,25%
La température du réacteur est de 250°C,
Catalyseur : celui obtenu selon l'exemple 12.
c) entrée troisième réacteur composition volumique du gaz :
$H_2S$ : 1%
$SO_2$ : 0,5%
$H_2O$ : 30%
$N_2$ : 68,5%
La température du réacteur est de 220°C,
Catalyseur : celui obtenu selon l'exemple 3.

Les rendements en soufre indiqués dans le tableau ci-après ont été obtenus par dosage par analyse chromatographique des gaz entrée et sortie de chaque réacteur. Il est à noter que pour le premier réacteur le rendement thermodynamique est de 86,2%, pour le second réacteur de 79,5% et pour le troisième réacteur de 72,5%.

A titre comparatif, le tableau 1 ci-dessous indique également les résultats obtenus avec des catalyseurs conventionnels d'alumine.

TABLEAU 1

| | Temps de contact en secondes | 0,25 | 0,5 | 1 | 2 | 3 |
|---|---|---|---|---|---|---|
| PREMIER REACTEUR | Catalyseur de l'invention Exemple 12 | 82 | 85 | 86 | 86 | 86 |
| | Alumine | 68 | 75 | 82 | 83 | 83 |
| SECOND REACTEUR | Catalyseur de l'invention Exemple 12 | | 67 | 72 | 78 | 79 |
| | Alumine | | 48 | 59 | 70 | 71 |
| TROISIEME REACTEUR | Catalyseur de l'invention Exemple 3 | | | 64 | 66 | 68 |
| | Alumine | | | 55 | 56 | 57 |

Il apparaît bien selon ce tableau que les catalyseurs selon l'invention permettent d'obtenir des rendements en soufre nettement supérieurs à ceux obtenus avec un catalyseur conventionnel pour des mêmes temps de contact.

De plus, l'introduction de 800 ppm (parts per million) d'oxygène ne modifie absolument pas les rendements obtenus dans le cas des catalyseurs de l'invention, alors que ceux-ci diminuent d'environ 25% dans le cas des catalyseurs conventionnels.

Exemple 20

Le présent exemple illustre l'application des catalyseurs de l'invention obtenus selon l'exemple 12 aux réactions

$$2H_2S + SO_2 \rightleftharpoons \frac{3}{n} S_n + 2H_2O \quad (1)$$

$$CS_2 + 2H_2O \dashrightarrow CO_2 + 2H_2S \quad (2)$$

On envoie dans un réacteur un gaz de composition volumique suivante :

$H_2S$ : 6%
$SO_2$ : 4%
$CS_2$ : 1%
$H_2O$ : 28%
$N_2$ : 61%

On impose au réacteur un profil de température proche de celui obtenu en réacteur industriel (adiabatique) dans les conditions suivantes :

TABLEAU 2

| Temps de contact en secondes | 1 | 2 | 3 | 4 |
|---|---|---|---|---|
| Température en °C | 260 | 330 | 340 | 340 |

La température d'entrée des gaz dans le réacteur est de 225°C.

Les rendements d'hydrolyse (2) obtenus sont consignés dans le tableau 3 ci-après :

TABLEAU 3

| Temps de contact en secondes | 1 | 2 | 3 | 4 |
|---|---|---|---|---|
| Catalyseur de l'invention | 60 | 93 | 99 | 100 |
| Alumine | 3 | 14 | 32 | 53 |

Il apparaît que les catalyseurs de l'invention permettent d'obtenir des rendements d'hydrolyse du $CS_2$ nettement supérieurs à ceux obtenus avec un catalyseur conventionnel pour les mêmes temps de contact.

Les rendements en soufre (1) obtenus sont consignés dans le tableau 4 ci-après. Il est à noter que le rendement thermodynamique correspondant aux conditions de réaction est de 66,5%.

TABLEAU 4

| Temps de contact en secondes | 1 | 2 | 3 | 4 |
|---|---|---|---|---|
| Catalyseur de l'invention | 66 | 66 | 66 | 66 |
| Alumine | 55 | 60 | 63 | 64 |

L'introduction de 5,000 ppm (parts per million) d'oxygène ne modifie absolument pas les rendements obtenus dans le cas des catalyseurs de l'invention, alors que ceux-ci diminuent de moitié dans le cas de catalyseurs conventionnels.

Exemple 21

Le présent exemple illustre l'application des catalyseurs de l'invention obtenus selon l'exemple 12 aux réactions :

$$2H_2S + SO_2 \rightleftharpoons \frac{3}{n} S_n + 2H_2O \ (1)$$

$$COS + H_2O \text{----} CO_2 + H_2S \quad (4)$$

On envoie dans un réacteur dans les mêmes conditions que celles décrites à l'exemple 21 un gaz de composition :

$H_2S$ : 7,7%
$SO_2$ : 4,4%
COS : 0,3%
$H_2O$ : 28%
$N_2$ : 60%

Les rendements d'hydrolyse (4) obtenus sont consignés dans le tableau 5 ci-après :

TABLEAU 5

| Temps de contact en secondes | 1 | 2 | 3 | 4 |
|---|---|---|---|---|
| Catalyseur de l'invention | 70 | 96 | 100 | 100 |
| Alumine | 4 | 17 | 39 | 60 |

Il apparaît que les catalyseurs de l'invention permettent d'obtenir des rendements d'hydrolyse du COS nettement supérieurs à ceux obtenus avec un catalyseur conventionnel pour les mêmes temps de contact.

## Revendications

1. Procédé de fabrication de supports de catalyseurs ou de catalyseurs par malaxage d'un mélange d'oxyde de titane, d'un additif de mise en forme et d'eau, par mise en forme de ce mélange par séchage éventuel et par calcination des produits obtenus, caractérisé en ce que le mélange comporte de 1 à 40 % en poids d'eau, de 0 à 15 % en poids d'additif, de 45 à 99 % en poids d'une poudre d'oxyde de titane mal cristallisée et/ou amorphe présentant une perte au feu comprise entre 1 et 50 % et obtenue par séchage d'une suspension aqueuse d'oxyde de titane provenant de l'attaque sulfurique de l'ilménite.

2. Procédé selon la revendication 1 caractérisé en ce que le mélange comporte de 5 à 35 % en poids d'eau, de 0,1 à 10 % en poids d'additif de mise en forme, de 55 à 94,9 % en poids de poudre d'oxyde de titane mal cristallisé et/ou amorphe.

3. Procédé selon les revendications 1 ou 2 caractérisé en ce que la perte au feu de la poudre est comprise entre 5 et 40 %.

4. Procédé selon la revendication 1 caractérisé en ce que la poudre a été obtenue par séchage d'une suspension aqueuse d'oxyde de titane amorphe et/ou mal cristallisé.

5. Procédé selon la revendication 1 caractérisé en ce que l'on ajoute au mélange jusqu'à 30 % en poids d'un constituant choisi parmi la silice, l'alumine, les argiles, les silicates, le sulfate de titane, les fibres céramiques.

6. Procédé selon la revendication 1 caractérisé en ce que le produit obtenu est calciné à une température comprise entre environ 200 et 900°C.

7. Application des produits obtenus selon le procédé de l'une quelconque des revendications précédentes comme catalyseurs ou supports de catalyseurs dans la catalyse Claus de récupération du soufre à partir de

gaz renfermant notamment de l'hydrogène sulfuré, de l'anhydride sulfureux et éventuellement des dérivés organiques du soufre.

8. Application selon la revendication 7 des produits comme catalyseurs de l'une au moins des réactions suivantes :

$$2H_2S + SO_2 \rightleftarrows \frac{3}{n} S_n + H_2O \quad (1)$$

$$CS_2 + 2H_2O \rightarrow CO_2 + 2H_2S \quad (2)$$

$$CS_2 + H_2O \rightarrow COS + H_2S \quad (3)$$

$$COS + H_2O \rightarrow CO_2 + H_2S \quad (4)$$

## Claims

1. Process for the manufacture of catalyst supports or catalysts by kneading a mixture of titanium oxide, a shaping additive and water, by shaping this mixture, by drying it, if appropriate, and by calcining the products obtained, characterised in that the mixture contains from 1 to 40% by weight of water, from 0 to 15% by weight of additive and from 45 to 99% by weight of a poorly crystalline and/or amorphous titanium oxide powder having a loss on ignition of between 1 and 50% and obtained by drying an aqueous suspension of titanium oxide originating from attack of ilmenite with sulphuric acid.

2. Process according to Claim 1, characterised in that the mixture contains from 5 to 35% by weight of water, from 0.1 to 10% by weight of shaping additive and from 55 to 94.9% by weight of poorly crystalline and/or amorphous titanium oxide powder.

3. Process according to Claims 1 or 2, characterised in that the loss on ignition of the powder is between 5 and 40%.

4. Process according to Claim 1, characterised in that the powder has been obtained by drying an aqueous suspension of amorphous and/or poorly crystalline titanium oxide.

5. Process according to Claim 1, characterised in that up to 30% by weight of a constituent chosen from amongst silica, alumina, clays, silicates, titanium sulphate and ceramic fibres is added to the mixture.

6. Process according to Claim 1, characterised in that the product obtained is calcined at a temperature of between about 200 and 900°C.

7. Application of the products obtained by the process of any one of the preceding claims as catalysts or catalyst supports in Claus catalysis for the recovery of sulphur from gases containing, in particular, hydrogen sulphide, sulphur dioxide and, if appropriate, organic sulphur derivatives.

8. Application, according to Claim 7, of the products as catalysts for at least one of the following reactions:

$$2H_2S + SO_2 \; \frac{3}{n} S_n + H_2O \quad (1)$$

$$CS_2 + 2H_2O \rightarrow CO_2 + 2H_2S \quad (2)$$

$$CS_2 + H_2O \rightarrow COS + H_2S \quad (3)$$

$$COS + H_2O \rightarrow CO_2 + H_2S \quad (4)$$

## Patentansprüche

1. Verfahren zur Herstellung von Katalysatorträgern oder Katalysatoren durch Kneten eines Gemisches aus Titandioxid, einem formgebenden Zusatz und Wasser durch Formgebung dieses Gemisches, gegebenenfalls Trocknen, und Calcinieren der erhaltenen Produkte, dadurch gekennzeichnet, daß das Gemisch 1 bis 40 Gew.% Wasser, 0 bis 15 Gew.% Zusatz und 45 bis 99 Gew.% eines Pulvers von schlecht kristallisiertem und/oder amorphem Titandioxid mit einem Glühverlust zwischen 1 und 50 % enthält und durch Trocknung einer wäßrigen Titandioxidsuspension erhalten wird, die aus dem Schwefelsäureaufschluß von Ilmenit stammt.

2. Verfahren nach Anspruch 1, dadurch gekennzeichnet, daß das Gemisch 5 bis 35 Gew.% Wasser, 0,1 bis 10 Gew.% des formgebenden Zusatzes und 55 bis 94,9 Gew.% des Pulvers von schlecht kristallisiertem und/oder amorphem Titandioxid enthält.

3. Verfahren nach Anspruch 1 oder 2, dadurch gekennzeichnet, daß der Glühverlust des Pulvers zwischen 5 und 40 % beträgt.

4. Verfahren nach Anspruch 1, dadurch gekennzeichnet, daß das Pulver durch Trocknen einer wäßrigen

Suspension von amorphem und/oder schlecht kristallisiertem Titandioxid erhalten wurde.

5. Verfahren nach Anspruch 1, dadurch gekennzeichnet, daß man dem Gemisch bis zu 30 Gew.% eines unter Siliciumdioxid, Aluminiumoxid, den Tonen, den Silicaten, Titansulfat und keramischen fasern gewählten Bestandteils zusetzt.

6. Verfahren nach Anspruch 1, dadurch gekennzeichnet, daß das erhaltene Produkt bei einer Temperatur zwischen etwa 200 und 900°C calciniert wird.

7. Anwendung der nach dem Verfahren von irgendeinem der vorangehenden Ansprüche erhaltenen Produkte als Katalysatoren oder als Katalysatorträger in der Claus-Synthese der Gewinnung von Schwefel aus Gas, das insbesondere Schwefelwasserstoff, Schwefeldioxid und gegebenenfalls organische Schwefelverbindungen enthält.

8. Anwendung nach Anspruch 7 von Verbindungen als Katalysator für wenigstens eine der folgenden Reaktionen :

$$2\ H_2S + SO_2 \rightleftharpoons \frac{3}{n} S_n + H_2O \qquad (1)$$

$$CS_2 + 2\ H_2O \rightarrow CO_2 + 2\ H_2S \qquad (2)$$

$$CS_2 + H_2O \rightarrow COS + H_2S \qquad (3)$$

$$COS + H_2O \rightarrow CO_2 + H_2S \qquad (4)$$

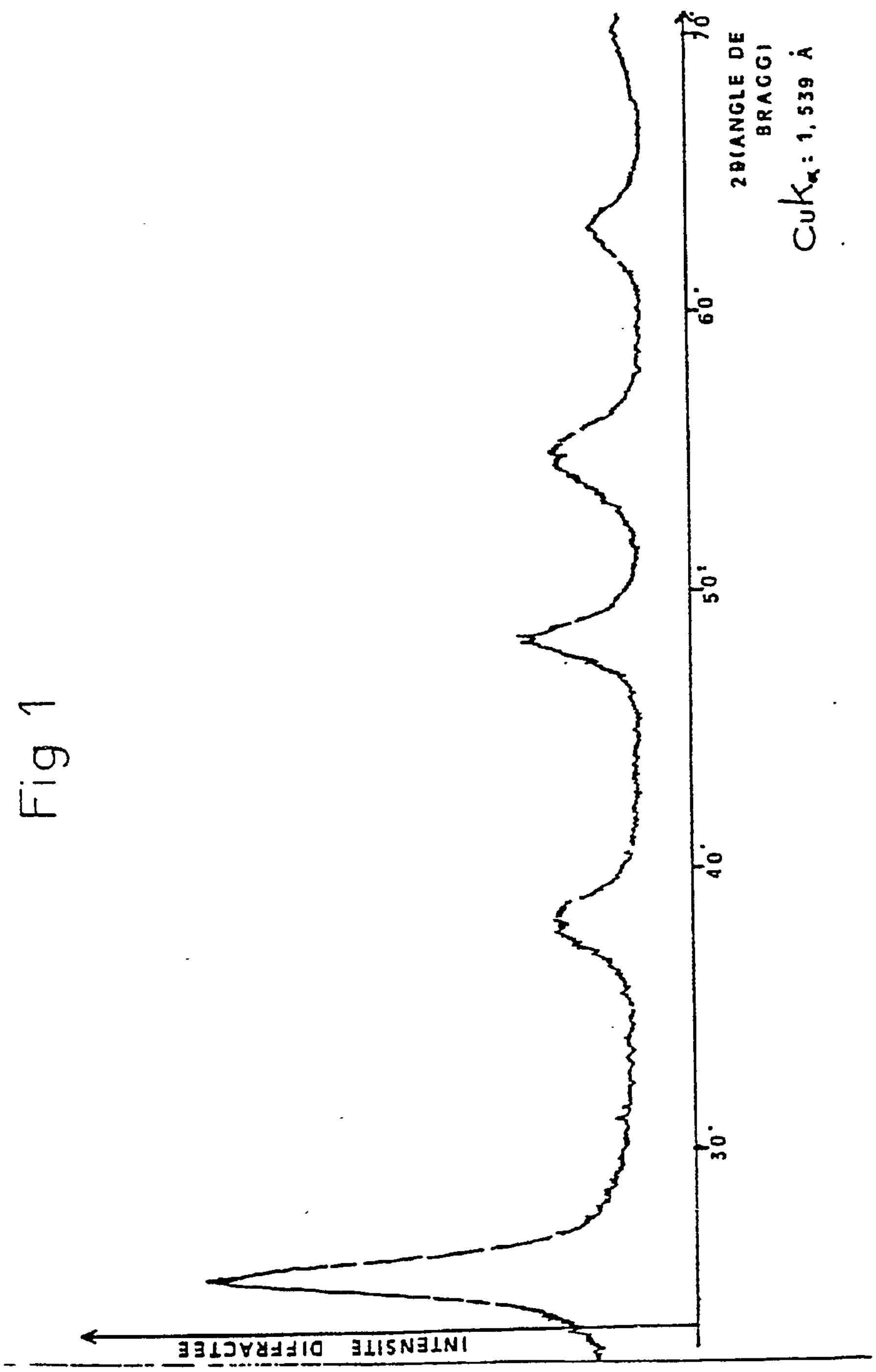
INTENSITE DIFFRACTEE
30°
40°
50°
60°
70°
2θ ANGLE DE BRAGG
CuKα : 1,539 Å

Fig 1